Europäisches Patentamt

(19) European Patent Office

Office européen des brevets

(11) Publication number: **0 259 458 B1**

(12) **EUROPEAN PATENT SPECIFICATION**

(45) Date of publication of patent specification:
25.09.91 Bulletin 91/39

(21) Application number: 87901991.7

(22) Date of filing: 06.03.87

(86) International application number:
PCT/US87/00478

(87) International publication number:
WO 87/05421 11.09.87 Gazette 87/20

(51) Int. Cl.⁵: **G06F 15/336**

(54) **OPTIMAL PARAMETRIC SIGNAL PROCESSOR WITH LATTICE BASIC CELL.**

(30) Priority: 07.03.86 US 837260
04.09.86 US 904382

(43) Date of publication of application:
16.03.88 Bulletin 88/11

(45) Publication of the grant of the patent:
25.09.91 Bulletin 91/39

(84) Designated Contracting States:
AT BE CH DE FR GB IT LI LU NL SE

(56) References cited:
IEEE Transactions on Acoustics, Speech, and
Signal Processing, volume ASSP-31, no. 1,
February 1983, IEEE (New York, US), S.Y. Kung
et al.: "A highly concurrent algorithm and
pipelined architecture for solving Toeplitz sys-
tems", pages 66-76
IEEE Int. Conf. on Acoustics, Speech and Sig-
nal Processing, volume 4, 26-29 March 1985,
IEEE (New York, US), G. Carayannis et al.: "A
new look on the parallel implementation of the
Shur algorithm for the solution of Toeplitz
equations", pages 1858-1861

(73) Proprietor: ADLER RESEARCH ASSOCIATES
2333 Morris Avenue
Union, NJ 07083 (US)

(72) Inventor: CARAYANNIS, George
32 Paparigopoulou St.
GR-11473 Athens (GR)
Inventor: HALKIAS, Christos
4, K. Paloma St.
Psyhiko, Athens (GR)
Inventor: MANOLAKIS, Dimitris
33 Westgate Road, A6
Chestnut Hill, MA 02167 (US)
Inventor: KOUKOUTSIS, Elias
119 Third of September Street
GR-11251 Athens (GR)

(74) Representative: Strehl, Schübel-Hopf,
Groening
Maximilianstrasse 54 Postfach 22 14 55
W-8000 München 22 (DE)

## Description

### FIELD OF THE INVENTION

The present invention relates to the field of signal processing, and in particular, parametric signal processing.

### BACKGROUND OF THE INVENTION

Parametric signal processing is used in many areas, such as speech and image analysis, synthesis and recognition, neurophysics, geophysics, array processing, computerized tomography, communications and astronomy, to name but a few.

One example of signal processing of particular importance is the linear prediction technique, which is used for speech analysis, synthesis and recognition, and for the processing of seismic signals, to enable the reconstruction of geophysical substrata. The linear prediction technique employs a specialized autocorrelation function.

Another form of signal processing which finds a multitude of applications, is the determination of an optimal (in the least square sense) finite impulse response filter. A signal processor employing such a technique works with the autocorrelation of the filter input signal and the cross-correlation between the input and the desired response signal, and may be used in many of the above-mentioned applications.

Still another form of signal processing of particular importance is known in the art as "L-step ahead" prediction and filtering, for solving the "optimum lag" problem. This technique is especially useful in designing spiking and shaping filters. Signal processors which perform this function employ a specialized autocorrelation function which also takes into account a time lag associated with the system.

Generally, as the order of the system under investigation increases, the complexity of the signal processing necessary to provide useful information also increases. For example, using the general Gaussian elimination procedure, a system of order p can be processed in "$O(p^3)$" steps, indicating the number of steps as being "on the order of" $p^3$, i.e., a function of p cubed. Thus, it will be appreciated that a system having order of p=100 requires on the order of one million processing steps to process the signal, a limitation of readily apparent significance, especially where real time processing is required.

Signal processing techniques have been developed which have reduced the number of operations required to process a signal. One such method has been based on a technique developed by N. Levinson, which requires $O(p^2)$ sequential operations to process the signal. In particular, the "Levinson technique" requires $O(2 \cdot p^2)$ sequential operations in order to process the signal. An improved version of this technique, known as the "Levinson-Durbin" technique requires $O(1 \cdot p^2)$ sequential operations to process the signal. Neither of these schemes is suitable for parallel implementation. On the general subject of the Levinson and Levinson-Durbin techniques, see N. Levinson, "The Wiener RMS (Root-Mean-Square) error Criterion in Filter Design and Prediction", J. Math Phys., Vol. 25, pages 261-278, January 1947; and J. Durbin, "The Filtering of Time Series Models", Rev. Int. Statist. Inst., Vol. 28, pages 233-244, 1960.

Although they represent an order of magnitude improvement over the Gaussian elimination technique, the Levinson and Levinson-Durbin techniques are too slow for many complex systems where real time processing is required.

Another way of implementing the main recursion of the Levinson-Durbin technique, for the computation of what is widely known as "lattice coefficients", was developed by Schur in 1917, in order to establish a system stability criterion. See I. Schur, "Uber Potenzreihen Die In Innern Des Einheitskreises Beschrankt Sind", J. Reine Angewandte Mathematik, Vol. 147, 1917, pages 205-232. Lev-Ari and Kailath, of Stanford University, have developed a different approach, based on the Schur and Levinson techniques, which provides a triangular "ladder" structure for signal processing. The Lev-Ari and Kailath technique uses the signal, per se, as the input to the processor, rather than autocorrelation coefficients, and it is used in the signal modelling context. See H. Lev-Ari and T. Kailath, "Schur and Levinson Algorithms for Non-Stationary Processes", IEEE International Conference on Acoustics, Speech and Signal Processing, 1981, pages 860-864.

In another modification to the Schur technique, Le Roux and C. Gueguen re-derived the Schur algorithm, giving emphasis to the finite word length implementation, using fixed point arithmetics. See Le Roux and Gueguen, "A fixed Point Computation of Partial Correlation, Coefficients", IEEE Transactions on Acoustics, Speech, and Signal Processing, June 1977, pages 257-259.

Finally, Kung and Hu, have developed a parallel scheme, based on the Schur technique, which has the features set forth in the first part of each of claims 1 to 4 and which uses a plurality of parallel processors, to process a signal, having order p, in $O(p)$ operations, a significant improvement compared to the Levinson-Durbin technique. See Kung and Hu, "A Highly Concurrent Algorithm and Pipelined Architecture for Solving Toeplitz Systems", IEEE Transactions on Acoustics, Speech and Signal Processing, Vol. ASSP-31, No. 1, February 1983, pp. 66-76. However, the application of the Kung and Hu technique is severely limited insofar as it requires that the number of processors be equal to the order of the system to be solved. Thus, the Kung and Hu technique cannot process a signal produced by a system having an order greater than the number of parallel processors. System complexity is therefore a major limiting factor in using the Kung and Hu technique, insofar as many complex systems may have orders much higher than the number of parallel processors currently available in modern VLSI or other technology.

It is therefore an object of the present invention to provide a signal processor and processing method which can be implemented using a lesser plurality of processing units to process a signal in a "partitioned parallel" manner.

The invention meets this object by a signal processor as characterized in claims 1 and 3 and a processing method as characterized in claims 2 and 4, claims 1 and 2 relating to processing autocorrelation coefficients associated with a symmetrical system, and claims 3 and 4 relating to a non-symmetrical system.

In accordance with the invention, a linear prediction signal processor is provided, which also forms the basis for L-step ahead at least square-finite impulse response (LS-FIR) processors. Also, the signal processing structure has minimal hardware complexity.

## BRIEF DESCRIPTION OF THE DRAWINGS

The foregoing and other objects, aspects and embodiments of the present invention will be described in more detail below with reference to the following drawing figures, of which:

FIG. 1 illustrates the "superlattice" processing structure, for the non-symmetrical case, in accordance with the invention of the parent application;

FIG. 2 illustrates the signal processing structure which allows the direct predictor coefficients $a_i$, to be derived from the lattice coefficients $k_i$ produced by either the structure of FIG. 1 or the corresponding structure of the present invention;

FIG. 3 illustrates the "superlattice" processing structure for the symmetrical case, in accordance with the invention of the parent application;

FIG. 4 illustrates a "butterfly basic cell" in accordance with the invention of the parent application;

FIG. 5 illustrates the repeated use of the basic cell of FIG. 4, in order to provide the processing structure of FIGS. 1 and 3, in accordance with the invention of the parent application;

FIG. 6 illustrates a "lattice basic cell" in accordance with the present invention;

FIG. 7 illustrates the repeated use of the lattice basic cell, in accordance with the present invention, and its relationship to the butterfly basic cell;

FIG. 8 illustrates the superlattice processing structrure for the symmetrical case, in accordance with the present invention;

FIG. 9 illustrates the implementation of the superlattice structure using three lattice basic cells, for a system having order eight;

FIGS. 10A and 10B illustrate, in detail, the signal flow within the superlattice structure using lattice basic cells, and butterfly basic cells, respectively;

FIG. 11 illustrates the signal flow through real and virtual processors which implement the arrangement of FIG. 9; and

FIG. 12 illustrates a hardware implementation of the arrangement shown in FIGS. 9 and 11, in accordance with the present invention, illustrating the three lattice basic cells, and associated hardware.

## DETAILED DESCRIPTION OF THE INVENTION

### The Non-Symmetrical Case

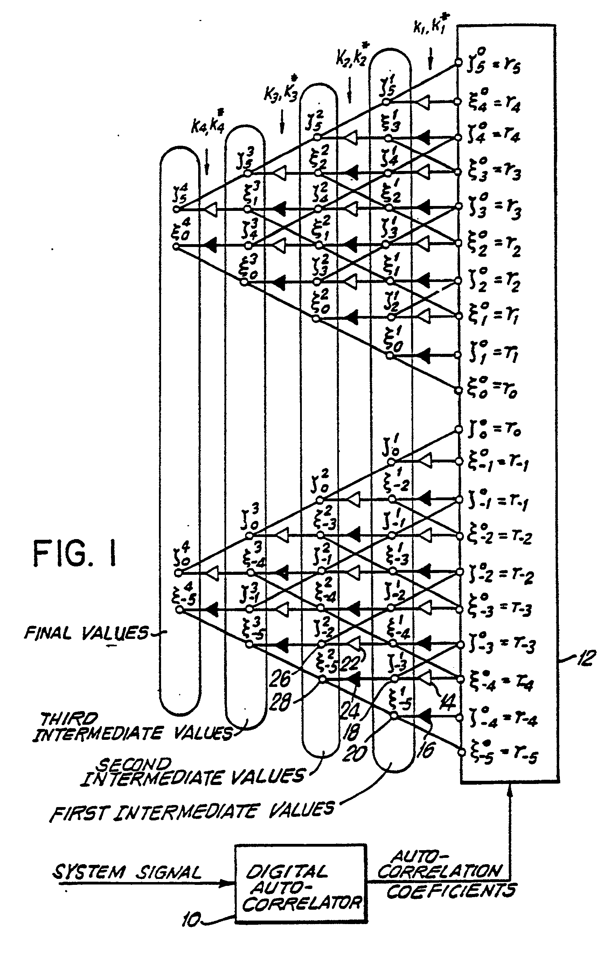

With reference to FIG. 1, there is shown a "superlattice" structure of multipliers, designated by triangles, and adders, designated by circles, arranged in a manner to process a signal in order to produce a linear predictor for a non-symmetrical system. This superlattice structure also forms the basis for L-step ahead and LS-FIR processors.

As shown in the figure, a signal from a system, having order P, such as a seismic signal, is applied to a well known digital autocorrelator 10, which produces autocorrelation coefficients $r_{-5}$ through $r_5$. The autocorrelation coefficients are delivered to an input device 12, such as a digital register, or buffer memory, for appli-

cation to the superlattice structure. With the exception of autocorrelation coefficients $r_{-5}$, $r_0$ and $r_5$, each autocorrelation coefficient is applied to a pair of multipliers which function to multiply each coefficient by a pair of "lattice coefficients" $k_n$ and $k_n{}^*$, $k_n$ being the normal lattice coefficient, and $k_n{}^*$ being the "adjoint" lattice coefficient. The multipliers indicated by white-triangles function to multiply the autocorrelation coefficients by the normal lattice coefficient $k_n$, while the multipliers indicated by the black triangles function to multiply the autocorrelation coefficients by the adjoint lattice coefficients $k_n{}^*$. Production of the normal and adjoint lattice coefficients will be described below.

The two products produced by multiplying each autocorrelation coefficient by the normal and adjoint lattice coefficients are added, in the adders indicated by the circles in the figure, to an adjacent pair of autocorrelation coefficients, to produce a set of first intermediate values $\zeta\{_n^1$, where n = -3, -2, -1, 0, 2, 3, 4, 5, and $\xi\{_m^1$, where m=-5, -4, -3, -2, 0, 1, 2, 3. For example, the autocorrelation coefficient $r_{-4}$, is multiplied by $k_1$ and $k_1{}^*$ in multipliers 14 and 16, respectively, and the products are added to the pair of autocorrelation coefficients $r_{-3}$ and $r_{-5}$, which are adjacent to coefficient $r_{-4}$, in adders 18 and 20, respectively. Similarly, autocorrelation coefficient $r_{-3}$, after multiplication by lattice coefficients $k_1$ and $k_1{}^*$, is individually added to the adjacent pair auto-correlation coefficients $r_{-4}$ and $r_{-2}$. The same process takes place for autocorrelation coefficients $r_{-2}$ through $r_4$, to produce the set of first intermediate values, as shown.

For the sake of continuity, the autocorrelation coefficients $r_{-5}$ through $r_5$, are also designated as $\zeta\{_n^o$ and $\xi\{_m^o$, where n = -4 to 5 and m = -5 to 4.

The lattice coefficients are calculated as follows:

$$k_{m+1} = -\zeta\,_{m+1}^{m}/\,\zeta\,_o^{m}$$
$$k^*{}_{m+1} = -\xi\,_{m+1}^{m}/\,\xi\,_o^{m}$$

The lattice coefficients $k_1$ and $k_1{}^*$ are produced directly from the autocorrelation coefficients, while the second set of lattice coefficients, $k_2$ and $k_2{}^*$, are calculated from the first intermediate values.

In a manner similar to that performed to generate the first intermediate values, selected pairs of adjacent first intermediate values, for example, $\xi\{_4^1$ and $\zeta\{_3^1$ are multiplied by the normal and adjoint lattice coefficients $k_2$ and $k_2{}^*$, respectively, in multipliers 22 and 24. Two first intermediate values $\zeta\{_2^1$ and $\xi\{_5^1$, adjacent to, and on either side of the selected pair, are added to the products produced by multipliers 22, 24 in adders 26 and 28, respectively, to produce two second intermediate values $\zeta\{_2^2$ and $\xi\{_5^2$. The remaining second intermediate values are generated in a similar manner, namely, by multiplying a selected pair of adjacent first intermediate values by the normal and adjoint lattice coefficients $k_2$ and $k_2{}^*$, and by adding to the products, the first intermediate values adjacent to, and on either side of, the selected pair.

It will also be seen that, following this signal flow, the third intermediate values and final intermediate values are generated in a similar manner.

The lattice coefficients $k_i$ completely characterize the linear predictor and can be used instead of the direct predictor coefficients. In fact, they are preferred for storage, transmission and fast speech synthesis, since they have the considerable advantages of being ordered, bounded by unity and can readily be used for stability control, efficient quantization, and the like. Since $r_0$ corresponds to the energy of the signal, and will therefore have the greatest amplitude of any of the signals processed by the superlattice, all variables can be normalized with respect to $r_0$, thus facilitating the use of "fixed point" processing with its attendant advantages of precision, speed, and processing simplicity.

The arrangement shown in FIG. 1 can produce lattice coefficients for a system of the type $\underline{Ra} = \underline{-d}$, where R has a Toeplitz structure. A detailed analysis of this technique is given by G. Carayannis et al., "A New Look on the Parallel Implementation of the Schur Algorithm for the Solution of Toeplitz Equations", IEEE International Conference on Acoustics, Speech and Signal Processing, March 26-29, 1985, the entire disclosure of which is hereby incorporated by reference.

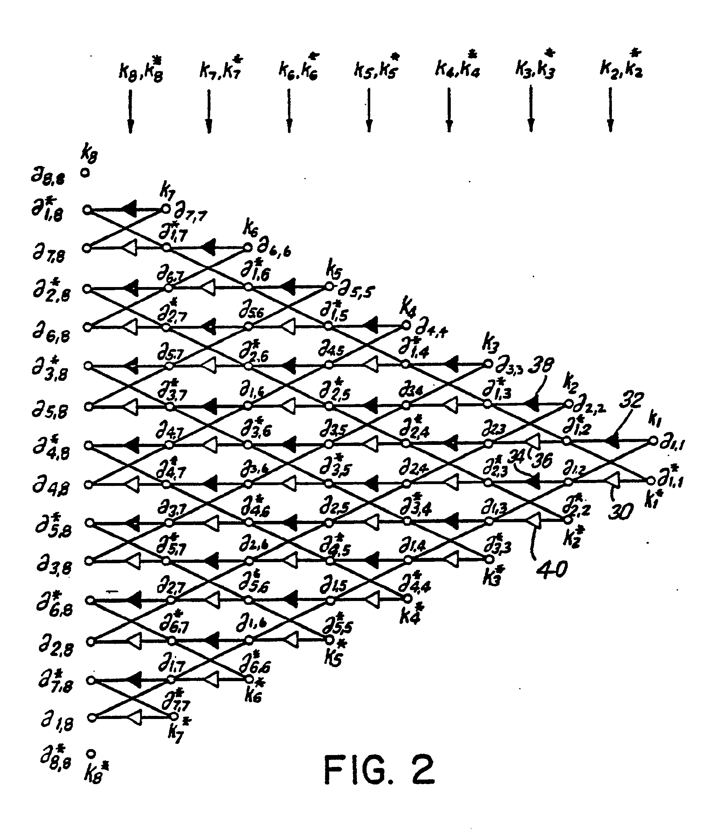

Although the lattice coefficients $k_i$ and $k_i{}^*$ are usually preferred, the direct predictor coefficients $a_i$, which are useful in spectral estimation, for example, can be derived from the lattice coefficients using the processing structure of FIG. 2. As shown, the lattice coefficients $k_1$ and $k_1{}^*$ are applied to a pair of multipliers 30 and 32, which function to multiply those lattice coefficients by the second lattice coefficients $k_2$ and $k_2{}^*$, respectively, to produce a first set of products $a_{1,2}$ and $a^*{}_{1,2}$, respectively. These products are then multiplied, in multipliers 34 and 36, respectively, by $k_3{}^*$ and $k_3$, and added to $k_2{}^*$ and $k_2$, respectively, to produce the values $a^*{}_{2,3}$ and $a_{2,3}$, respectively. Also, the value of the lattice coefficients $k_2$ and $k_2{}^*$ are multiplied by $k_3{}^*$ and $k_3$, respectively,

in multipliers 38 and 40, and the intermediate values $a^*_{1,2}$ and $a_{1,2}$ are added to these products to produce further intermediate values $a^*_{1,3}$ and $a_{1,3}$, respectively. This process continues until the direct filter coefficients $a_{1,8}$ through $a_{8,8}$ and $a^*_{1,8}$ through $a^*_{8,8}$ are produced. Though described with reference to the parent application, the processing structure of FIG. 2 can also be used with the present invention, as will be appreciated by those skilled in the art.

## The Symmetrical Case

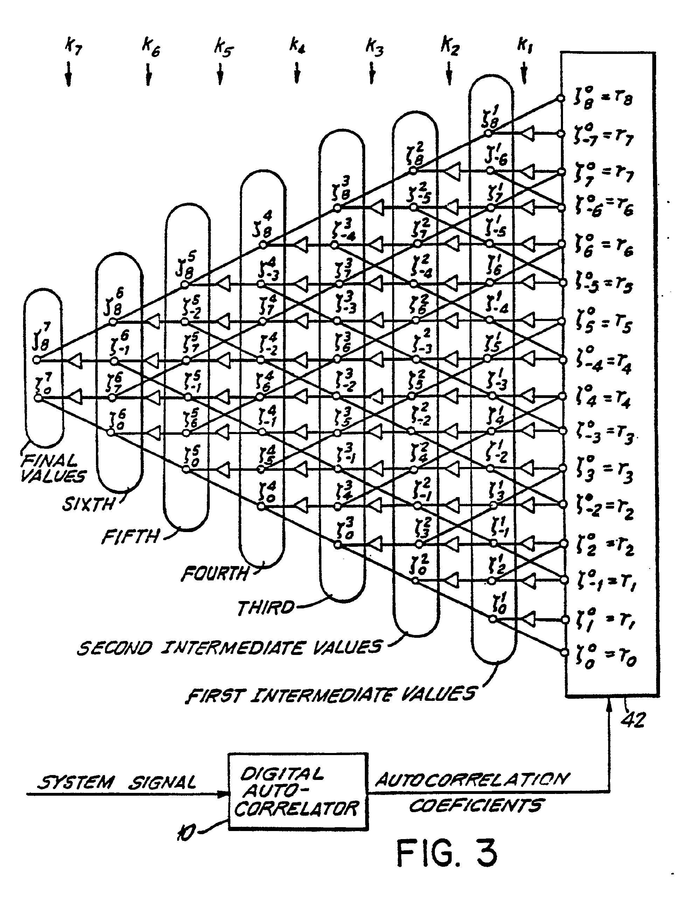

A special situation exists where the system to be analyzed can be characterized by $R\underline{a} = \underline{-d}$, where R has a symmetrical Toeplitz structure, as in the case of auto-regressive linear prediction. In such cases, the superlattice structure of FIG. 1 is simplified to the symmetrical superlattice form shown in FIG. 3, since $r_i = r_{-i}$; $k_i = k_i^*$ and $\zeta\{^m_i = \zeta\{^m_i$, for the symmetrical case. Thus, the two triangular lobes of FIG. 1 become identical, so that one of them can be omitted, allowing the elimination of half of the signal processing. The signal processing structure for the symmetrical case, shown in FIG. 3, provides linear prediction, or auto-regressive modelling, by calculating the lattice coefficients, or in the symmetrical case, the "PARCOR" (partial correlation) coefficients.

It should initially be noted that with this signal processing structure (as well as that shown in FIG. 1) there is no redundancy. That is, each $\zeta$ appearing in the processor is produced only once. Additionally, only those signals needed for the production of lattice coefficients, or PARCORs are involved. Thus, the signal processing structure shown in FIG. 3 (and in FIG. 1) represent optimal processing schemes.

In a manner similar to that shown for the non-symmetrical case of FIG. 1, a system signal is applied to a digital autocorrelator 10, which produces autocorrelation coefficients which characterize the symmetrical system, namely, $r_0$ through $r_8$. The coefficients are applied to an input device 42, such as a digital register or memory. Note that the signal processor of FIG. 3 receives a signal from a system having an order of 8, whereas the system in FIG. 1 receives a signal from a system having an order of 5.

As with the signal processor of FIG. 1, the signal processor of FIG. 3 takes each autocorrelation coefficient, except the first and last, namely $r_0$ and $r_8$, and multiplies it by the first lattice coefficient $k_1$, which is calculated from $r_0$ and $r_1$ ($\zeta\{^0_0, \zeta\{^0_1)$, according to the general formula $k_p = -\zeta\{^{p-1}_p/\zeta\{^{p-1}_0$. The product of each such multiplication is added, individually, to the adjacent two autocorrelation coefficients, to produce the first intermediate values $\zeta\{^1_n$, where n=0, 2 to 8 and -6 to -1. For example, autocorrelation coefficient $r_1$, designated as $\zeta\{^0_1$ and $\zeta\{^0_{-1}$, for the sake of conformance with the intermediate variables, is multiplied by lattice coefficient $k_1$, and autocorrelation coefficients $r_0$ and $r_2$ are added, individually, to the product, to produce a pair of first intermediate values $\zeta\{^1_0$ and $\zeta\{^1_2$, respectively. Similarly, the next two first intermediate values, namely $\zeta\{^1_{-1}$ and $\zeta\{^1_3$ are produced by multiplying autocorrelation coefficient $r_2$ by the lattice coefficient $k_1$, and adding, individually, the adjacent autocorrelation coefficients, namely, $r_1$ and $r_3$ to the products.

The second intermediate values can be calculated from the first intermediate values in a similar manner. First, $k_2$ can be calculated from the ratio of $\zeta\{^1_2$ and $\zeta\{^1_0$ in accordance with the formula given above. Then, second intermediate values $\zeta\{^2_3$ and $\zeta\{^2_0$, for example, are calculated by multiplying the first intermediate values $\zeta\{^1_{-1}$ and $\zeta\{^1_2$ by the lattice coefficient $k_2$, and adding the adjacent first intermediate values $\zeta\{^1_3$ and $\zeta\{^1_0$ to the products, individually. The signal processing continues until the final values $\zeta\{^7_8$ and $\zeta\{^7_0$ are obtained, from which the last lattice coefficient $k_8$ can be calculated from the above formula.

If direct predictor coefficients are desired, the processing structure shown in FIG. 2 can be employed for the symmetrical case as well as the non-symmetrical case. However, the processing structure of FIG. 2 is somewhat simplified for the symmetrical case since $k_n = k_n^*$.

Returning to FIG. 3, several points should now be noted. Although drawn as a triangular lobe, to illustrate the precise details of the signal processing, it will be appreciated that the various items of hardware, namely, the multipliers, designated by triangles, and the adders, designated by circles, can be comprised of a single set of 14 multipliers and 14 adders which first function to produce the first intermediate values, then the second intermediate values, and so on through the final values. Furthermore, if 14 multipliers and adders are not available, a lesser number can be shared within any given group of intermediate values.

## Butterfly Basic Cell

A first way to implement this approach, is to utilize a structure which will be called the "butterfly basic cell" or "BBC".

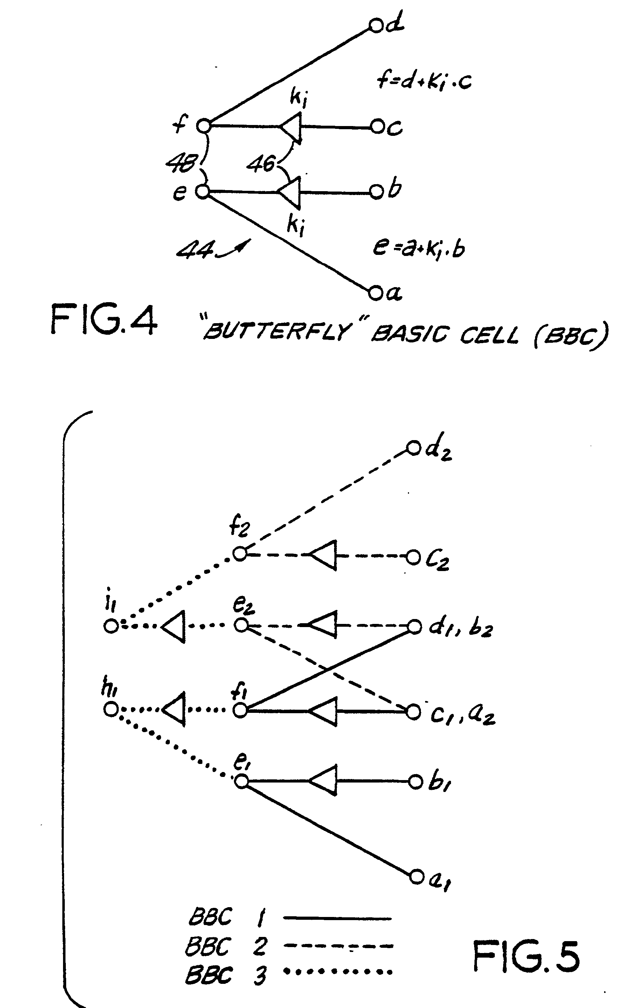

Specifically, FIG. 4 illustrates a BBC 44 which comprises a pair of multipliers 46 and a pair of adders 48. As shown in FIG. 4, the BBC 44 functions to produce a signal $e = a + k_i.b$, and a signal $f = d + k_i.c$.

The BBC can be realized with one "two-cycled" processor, or two "one-cycled" processors, to provide signals e and f. The use of the BBC, as defined in FIG. 4, provides a homogeneous configuration in the hardware, in the sense that the repetition of the same BBC suffices to produce the whole superlattice structure.

More specifically, FIG. 5 illustrates three BBC's denoted by solid, dashed and dotted lines, respectively. By merely duplicating the processing unit illustrated in FIG. 4, a superlattice of any size can be "constructed", to process a signal of virtually any complexity. For example, the superlattice of FIG. 5 will process a signal from a system having order 3. To process a signal from a system having order 4, a first additional BBC can be "placed on top of" BBC 2, to produce first intermediate values $e_3$ and $f_3$ (not shown). A second additional BBC would similarly be added, to receive as inputs, $e_2$, $f_2$, $e_3$ and $f_3$, to produce outputs $h_2$, $i_2$ (not shown). Finally, a third additional BBC would be used to receive $h_1$, $i_1$, $h_2$ and $i_2$ as inputs, and produce outputs $j_1$ and $l_1$ (also not shown).

Lattice Basic Cell

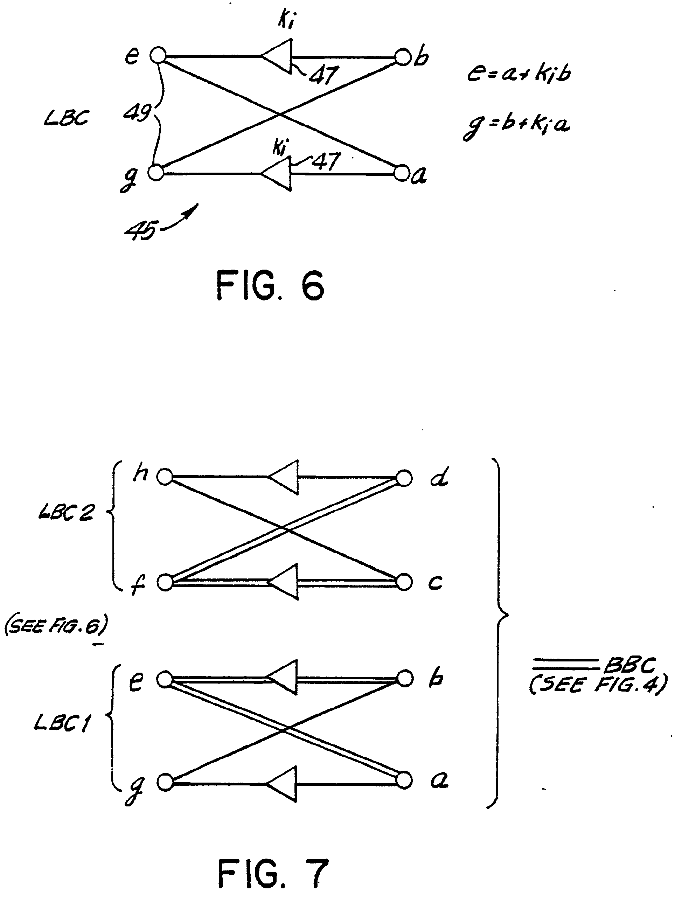

The processing required for the structure of FIG. 3 is implemented in the manner illustrated in FIG. 6, which illustrates a structure 45 which will be called the "Lattice Basic Cell" or "LBC". Specifically, the LBC 45, shown in FIG. 6, functions to take a pair of values a,b and multiply each of those values individually, in multipliers 47, by lattice coefficient $k_i$, and the respective products are added to the other of the inputs in adders 49, to produce values $e = a + k_i b$ and $g = b + k_i a$. Note that the same operation produces e and g when the inputs a and b are interchanged.

FIG. 7 illustrates the relationship between the LBC of FIG. 6 and the BBC of FIG. 4. Specifically, within each adjacent pair of LBC's resides a single BBC. LBC 1 receives inputs a and b and produces outputs e and g therefrom, and LBC 2 similarly receives a pair of inputs, c and d, to produce a pair of outputs f and h. On the other hand, the BBC, illustrated in FIG. 7 by double lines, takes inputs a, b, c and d to produce a pair of outputs e and f, in a manner identical to that illustrated in FIG. 4.

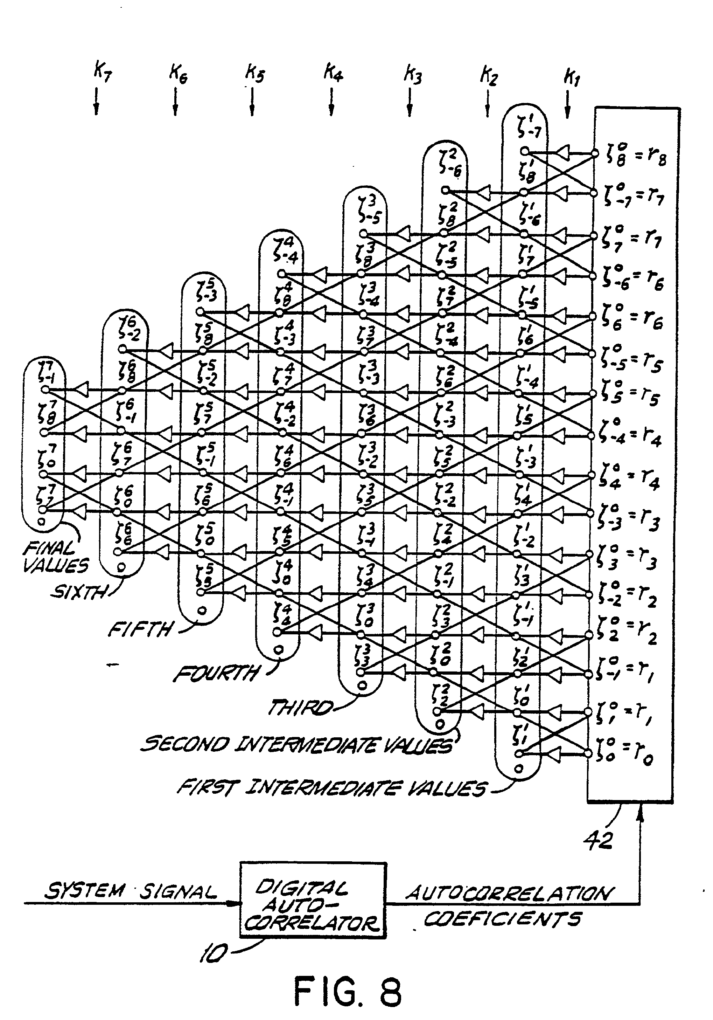

Thus, it will be appreciated that a structure similar to that shown in FIG. 3 can be implemented through the repetitive use of LBC's, rather than BBC's. One such implementation is illustrated in FIG. 8, which is identical to FIG. 3 except for the upper and lower extensions, which produce intermediate values $\zeta \{_n^n$, for n = 1 to 7, along the lower border of the triangular lobe and $\zeta \{_n^i$, where n = -7 to -1 and i = 1 to 7, respectively, along the upper border of the lobe. These additional extensions to the superlattice are due to the structure of the LBC's.

Although it may appear that the use of the LBC's leads to a structure which is not optimal, because of the upper and lower extensions of the superlattice, there is a distinct advantage when the LBC's are used instead of the BBC's: the use of the LBC's produces a superlattice in which the size of the bordering buffer can be reduced to one-half the size necessary in the case where BBC's are used, as will be fully explained below. The hardware implementation of the LBC's is therefore preferable over that of the BBC's.

Also, although the intermediate quantities in the upper extensions of the superlattice are not necessary for the solution of the eighth order signal, those quantities would be used for a signal having order nine. The intermediate quantities $\zeta \{_n^n$ in the lower extensions are, by definition, zero, as a consequence of the Yule-Walker equations.

In view of the foregoing, it will be appreciated by those skilled in the art that the use of the LBC's to implement the superlattice illustrated in FIG. 8 can be achieved in a fully parallel implementation, in an order recursive implementation, or in a parallel partitioned implementation. A parallel partitioned implementation of the superlattice using the LBC's will now be described herein, since such implementation includes elements of both the fully parallel and order recursive implementations.

Partitioned Parallel Implementation Using LBC's

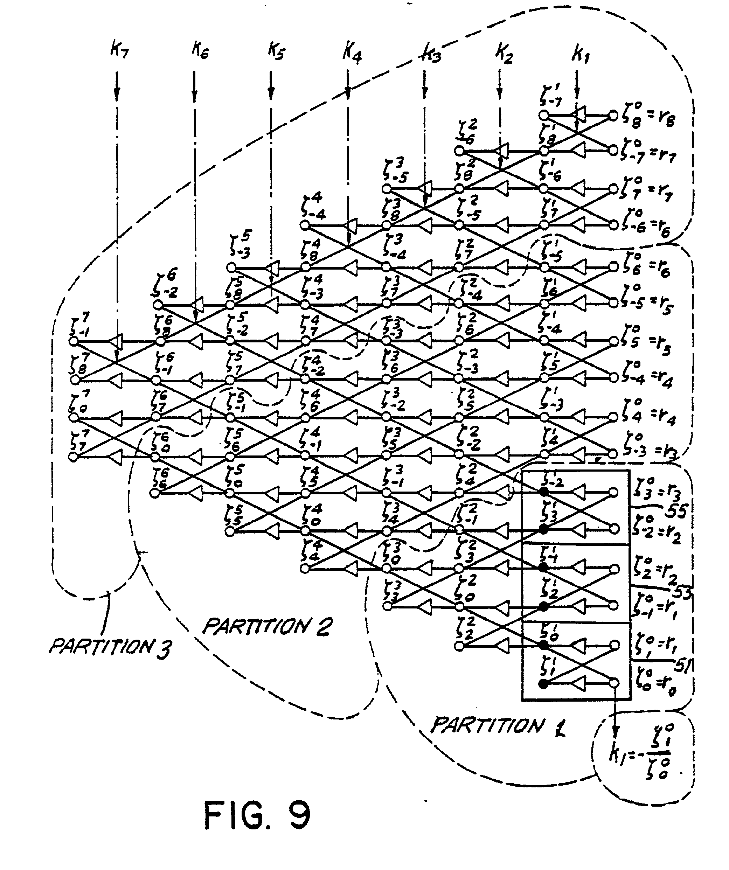

With reference to FIG. 9, three LBC's 51, 53 and 55 are illustrated within a superlattice structure for processing a signal from a system having order 8. The signal is processed using the three LBC's which process the autocorrelation coefficients $r_0$ - $r_3$ to produce the first set of intermediate values $\zeta \{_n^1$, n = -2, -3, -1, 2, 0, and 1. At this point, $\zeta \{_2^1$ is stored, and the intermediate values $\zeta \{_3^1$, $\zeta \{_1^1$, $\zeta \{_2^1$ and $\zeta \{_0^1$ are fed back to the inputs of two of the LBC's, for example 53 and 55, and second intermediate values $\zeta \{_n^2$, n = -1, 3, 0, and 2 are produced. Then, $\zeta \{_1^2$ is stored and the intermediate values $\zeta \{_3^2$ and $\zeta \{_0^2$ are fed back to a single LBC, for example 55, and processed to produce third intermediate values $\zeta \{_0^3$ and $\zeta \{_3^3$.

Thusfar, the LBC's 51, 53 and 55 have implemented, in parallel, the processing technique of the present invention, but for only a portion, or "partition" of the superlattice, corresponding in width to the number of parallel LBC's employed. This partition will be referred to as "partition 1". After processing partition 1, the LBC's 51, 53

6

and 55 are now supplied with autocorrelation coefficients $r_3$ - $r_6$, in order to implement a second partition, referred to in FIG. 9 as "partition 2". The LBC's process the autocorrelation coefficients to produce the first intermediate values $\zeta \{_{n}^{1}$, where n = -5, 6, -4, 5, -3 and 4, which values, except for $\zeta \{_{5}^{1}$, are fed back to the basic cells 51, 53 and 55, along with the single intermediate value $\zeta \{_{2}^{1}$, stored during the processing of partition 1. Note that only a single first intermediate value produced during partition 1 is used during the processing of partition 1, in contrast with the implementation using BBC's, which requires that two first intermediate values produced during partition 2 be used during the processing of partition 2.

The processing of partition 2 continues in a similar manner, until it is complete. As will be appreciated, during the processing of the first two partitions, the lattice coefficients which have been produced ($k_1$ - $k_7$) are stored. It will also be appreciated that during the processing of partitions 1 and 2, basic cells 51, 53 and 55 operate to "cut through" the superlattice in parallel, in order to provide lattice coefficients k2 - k4, in partition 1, and then recursively "cut through" the superlattice in parallel, to produce lattice coefficients $k_5$ - $k_7$ in partition 2. There now only remains the processing for the last lattice coefficient $k_8$, which is accomplished in a third partition, "partition 3". Since the system is of order 8, the processing during partition 3 requires only two LBC's, for example, 53 and 55. This is in contrast with the third partition shown in FIG. 6, which requires only a single BBC. Although there are three partitions in both cases (FIG. 9 of the present case and FIG. 6 of the parent), the number of partitions can vary between the two techniques.

Specifically, the following formulas relate the number of processors (n), the number of partitions ($n_p$), the system order (p) and the number of active processors in the last partition ($\alpha$):

LBC IMPLEMENTATION

$\alpha$       = (p) modulo (n)
$n_p$       = [P/n]
if $\alpha$       $\neq$ 0, then $n_p \leftarrow n_p + 1$
else $\alpha$       $\leftarrow$ n

BBC IMPLEMENTATION

$\alpha$       = (p-1) modulo (n)
$n_p$       = [(p-1)/n]
if $\alpha$       $\neq$ 0, then $n_p \leftarrow n_p + 1$
else $\alpha$       $\leftarrow$ n

where the brackets "[ ]" indicate the integer part of the argument.

As mentioned above, an inspection of FIG. 9 will reveal that only a single first intermediate value, $\zeta \{_{2}^{1}$, a single second intermediate value, $\zeta \{_{1}^{2}$, and a single third intermediate value, $\zeta \{_{0}^{3}$, produced during partition 1, need to be stored for the processing of partition No. 2, and likewise for those intermediate values produced during partition No. 2, for use with partition No. 3. This is in contrast with the BBC implementation, where a pair of first intermediate values $\zeta \{_{1}^{1}$ and $\zeta \{_{2}^{1}$, produced during partition 1, are necessary for partition 2, and so on. This leads to a simplified hardware implementation, where the size of the bordering buffer required to implement the structure of FIG. 9 need only be one-half the size of the bordering buffer required to implement the structure of FIG. 6 of the parent application.

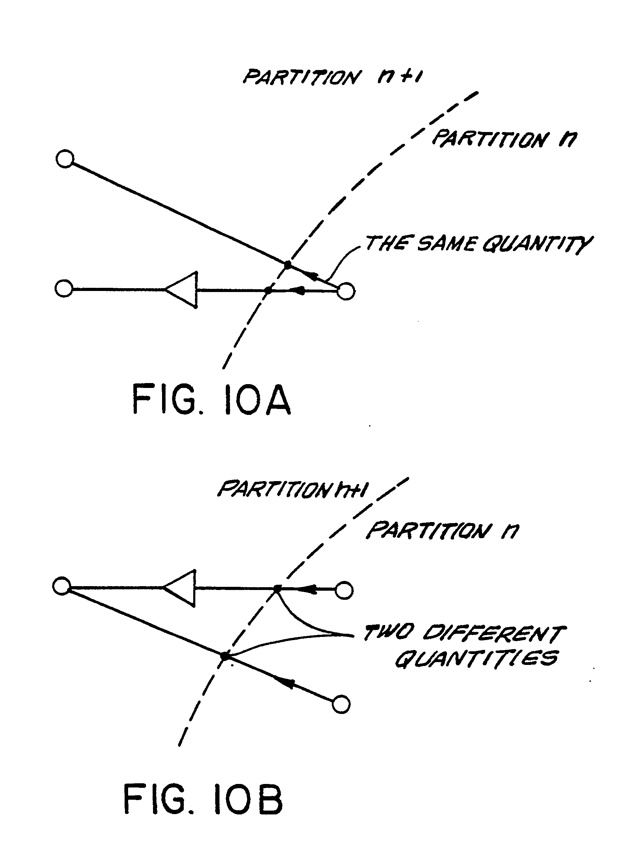

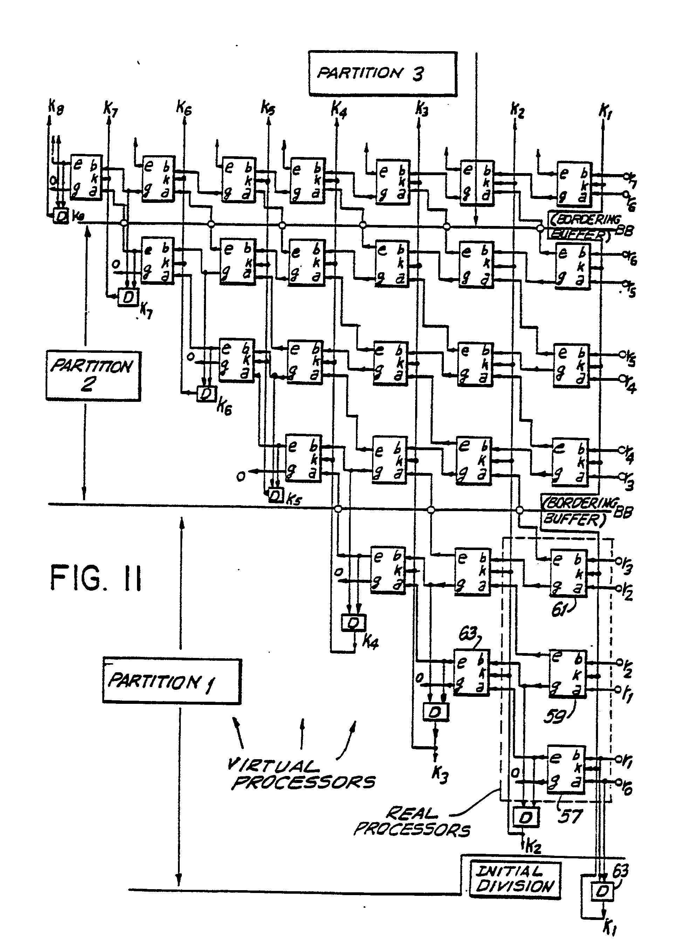

This principle is briefly explained in FIGS. 10A and 10B, which illustrate the topology of signal flow between partitions in the LBC and BBC implementations, respectively. As shown in FIG. 10A, only a single value at any given time needs to be used from one partition to the next using the LBC implementation, while as shown in FIG. 10B, two different quantities must be stored at a given time for use in the succeeding partition, using the BBC implementation. Thus, a simplified bordering buffer can be realized, as illustrated in FIG. 11, which illustrates the signal flow through real and virtual processors implementing the arrangement of FIG. 9. Specifically, the signal processor is implemented using three parallel processors 57, 59 and 61, designated "real processors", which respectively include the basic cells 51, 53 and 55 of FIG. 9. Each of the processors 57, 59 and 61 can implement an LBC either as one "two-cycled" processor, or as two "one-cycled" processors. Also shown in FIG. 11, are a plurality of other processors, termed "virtual processors", the existence of which is simulated, in order to process an input signal in accordance with the superlattice structure of FIG. 9. Each of the processors 57, 59 and 61 receives a pair of adjacent autocorrelation coefficients at its a and b inputs, and functions to process the a and b inputs, along with the lattice coefficient k, to produce a pair of outputs e and g (also shown in

FIG. 6). The first lattice coefficient $k_1$ is produced by dividing autocorrelation coefficients $r_1$ and $r_0$ in an initial divider 63. One of the first intermediate values, $e$, from processor 61 is stored in the bordering buffer, BB, as compared with two such first intermediate values stored in the bordering buffer of the parent application, shown in FIG. 7 therein.

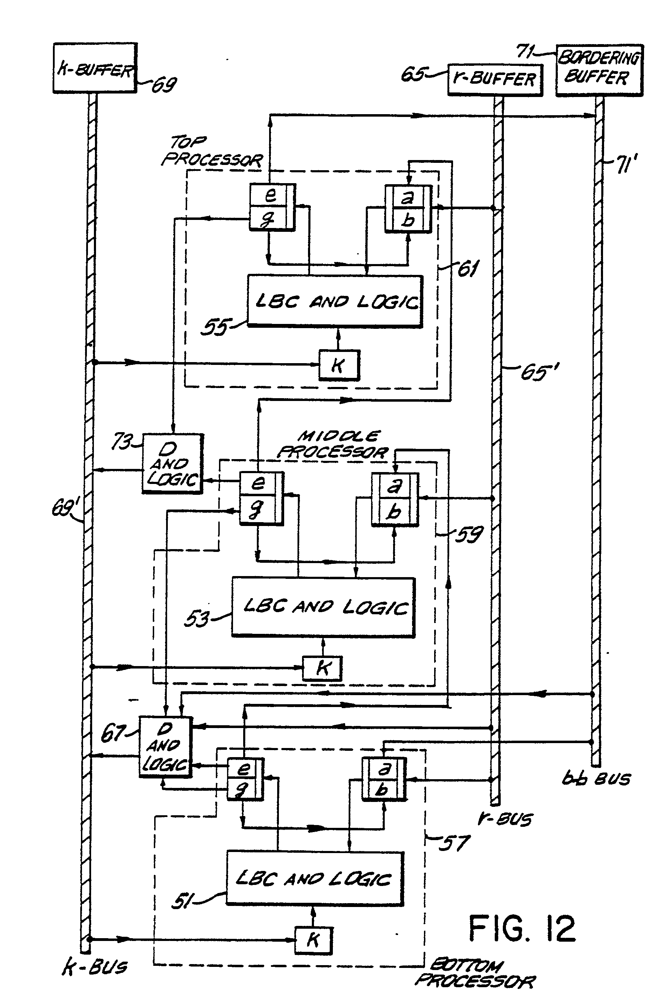

First intermediate value $e$ from processor 57 is applied to the $a$ input of virtual processor 63 and first intermediate value $g$ from processor 59 is applied to the $b$ input of virtual processor 63, along with the second lattice coefficient, $k_2$, calculated from the quotient of first intermediate values $e$ and $g$ from real processors 57 and 59, respectively. Although illustrated as being transmitted to a further processor 63, the first intermediate values are actually fed back into the same real processors, as will be explained in more detail with reference to FIG. 12.

At each iteration through each partition, a new lattice coefficient is calculated, and only a single intermediate value needs to be stored for use in the succeeding partition.

FIG. 12 illustrates an example of an actual hardware implementation for providing the partitioned parallel process using LBC's. Specifically, the parallel processors 57, 59 and 61 are shown as including the LBC's 51, 53 and 55 of FIG. 9, respectively, and associated logic. Each processor also includes an a,b register and an e,g register, which function to individually store the values $a$, $b$, and $e$, $g$, associated with each basic cell (as illustrated in FIG. 6), and a k register, which stores the value of a lattice coefficient.

Each of the a,b registers receives the appropriate autocorrelation coefficients from an r-buffer 65, via r-bus 65'. The r-buffer also directly provides the first two autocorrelation coefficients $r_1$ and $r_0$ to divider 67 and associated logic, which accordingly calculates the initial lattice coefficient $k_1$. The output from divider 67 is applied to the k-buffer 69, via k-bus 69', for storage of the lattice coefficients used throughout the signal processing.

The outputs of the a,b registers in the three processors are connected to their associated LBC's. The third input to the LBC's is provided by its associated k register, which in turn receives its input from the k-buffer via the k-bus 69'. The output of each LBC is applied to the e,g register. The outputs of the e register in the bottom and middle processors are applied to the inputs of the a registers of the middle and top processors, respectively, while the output of the e register in the top processor is applied to the bordering buffer 71 via the bordering bus 71'. The outputs of the e registers in the bottom and middle processors are also applied to dividers 67 and 73, respectively, the former of which also receives an output from the g register of the bottom processor. In addition, the outputs of the g registers in each processor are applied to the inputs of the b registers of the associated processor, and in the case of the middle processor, the output of the g register is applied to divider 67, while in the case of the top processor, the output of the g register is applied to the divider 73. The outputs from the dividers 67 and 73 are applied to the k-buffer via the k-bus 69'. The divider 67 also receives as an input a signal from the bordering bus 71', as does the a,b register of the bottom processor 57.

The operation of the hardware shown in FIG. 12 to produce the superlattice processing structure illustrated in FIGS. 9 and 11 will now be described:

Phase 0 - Initial Division ($k_1$ computation - storage-transmission)

The divider 67, attached to the bottom processor, accepts the first two autocorrelation coefficients from the r buffer 65 and produces $k_1$. All other elements are idle. $k_1$ is stored in the k-buffer 69 and transmitted to the k-register of each processor through the k-bus 69'.

Phase 1 - Initialization of Partition 1:

The a,b registers of all processors are initialized through the r-bus 65' with the proper autocorrelation coefficients.

Phase 2 - Lattice Basic Cell computations:

The LBC's of all processors compute intermediate values and store them in the e,g registers of each processor.

Phase 3 - $k_2$ computation - storage - transmission:

The divider 67 attached to the bottom processor computes $k_2$ from the e register of the bottom processor and the g register of the middle processor. $k_2$ is stored in the k-buffer 69 and transmitted to the k-register of each processor through the k-bus 69'.

Phase 4 - Initialization of the a,b registers of each processor, update of the bordering buffer 71:

The following transfers take place:
e of the bottom processor → a of the middle processor.
e of the middle processor → a of the top processor.
e of the top processor → bordering buffer.
g of the middle processor → b of the middle processor.
g of the top processor → b of the top processor.

Phase 5 - Lattice Basic Cell computation with the bottom element idle:

The LBC's of the middle and top processor produce intermediate values which are stored in their corresponding e,g registers.

Phase 6 - $k_3$ computation-storage-transmission:

The divider attached to the middle processor computes $k_3$, fed by the e register of this processor and the g register of the top processor. $k_3$ is stored in the k-buffer 69 and transmitted to the k-register of each processor through the k-bus 69'.

Phase 7 - Initialization of the a,b registers, update of the bordering buffer:

The following transfers take place:
e of the middle processor → a of the top processor.
e of the top processor → bordering buffer.
g of the top processor → b of the top processor.

Phase 8 - Top Lattice Basic Cell computation with the bottom and middle processors idle:

The top LBC computes intermediate values and stores them in its e,g register.

Phase 9 - Bordering buffer update:

The following transfer takes place:
e of the top processor → bordering buffer.

Phase 10 $k_1$ retransmission:

$k_1$, which has been stored in the k-buffer, is transmitted to the k-registers of all processors through the k-bus.

Phase 11 Initialization of partition 2:

The a,b registers of all processors are initialized through the r-bus with the proper autocorrelation coefficients.

Phase 12 Lattice Basic Cell computations:

The LBC's of all processors compute intermediate values and store them in the e,g registers of each processor.

Phase 13 Initialization of the a,b registers, update of the bordering buffer, and $k_2$ retransmission:

The following transfers take place:
The a register of the bottom processor is initialized from the bordering buffer. $k_2$ is retransmitted to the k-registers of all processors.
e of the bottom processor → a of the middle processor.
e of the middle processor → a of the top processor.
e of the top processor → bordering buffer.

9

g of the bottom processor → b of the bottom processor.
g of the middle processor → b of the middle processor.
g of the top processor → b of the top processor.
The a register of the bottom processor must be initialized from the bordering buffer before the contents of the latter are destroyed by the storage of the newly computed contents of e register in the top processor.

Phase 14 Lattice Basic Cell computations:

The same as Phase 12.

Phase 15 Initialization of the a,b regiters, update of the bordering buffer, $k_3$ retransmission:

The same as Phase 13, but $k_3$ is retransmitted instead of $k_2$.

Phase 16 Lattice Basic Cell computations:

The same as Phase 12.

Phase 17 $k_4$ computation - storage - transmission:

The divider attached to the bottom processor computes $k_4$ fed by the g register of the bottom processor and a quantity from the bordering buffer. $k_4$ is stored in the k-buffer and transmitted to the k-register of each processor through the k-bus.

Phase 18 Initialization of the a,b registers, update of the bordering buffer:

The same as Phase 13, except for $k_2$ retransmission.

Phase 19 LBC computation:

The same as Phase 12.

Phase 20 $k_5$ computation-storage-transmission:

The same as Phase 3, but $k_5$ is computed-stored-transmitted instead of $k_2$.

Phase 21 Initialization of the a,b registers, update of the bordering buffer:

The same as Phase 4.

Phase 22 LBC computations with the bottom processor idle:

The same as Phase 5.

Phase 23 $k_6$ computation-storage-transmission:

The same as Phase 6, but $k_6$ is computed-stored-transmitted instead of $k_3$.

Phase 24 Initialization of the a,b registers, update of the bordering buffer:

The same as Phase 7.

Phase 25 Top LBC computations with the bottom and middle processors idle:

The same as Phase 8.

Phase 26 Bordering Buffer update:

The same as Phase 9.

Phase 27 $k_1$ retransmission:

The same as Phase 10.

Phase 28 Initialization of partition 3:

The same as Phase 11.

The continuation through the third partition will be understood by those skilled in the art in view of the foregoing.

The superlattice concept is suitable for efficient hardware implementation with commercially available processors. A small number of processors, i.e., 3 to 6 may be used for many applications with very good results and a substantial increase in processing speed over that of prior art signal processors.

It will thus be appreciated that the present invention allows the use of a feasible number of parallel processors to perform highly efficient linear prediction signal processing. When so implemented, the parallel-partitioned implementation provides the benefits of parallel processing, manageable hardware complexity, and optimal signal processing for a given number of available processors. It will also be appreciated that by using the LBC's, hardware complexity can be minimized.

## Claims

1. A signal processor which receives autocorrelation coefficients $r_i$ with i = (0 - p] corresponding to a system having order p, for providing lattice coefficients $k_j$ with j = [1 - p] of said system, comprising

an input device (65) for receiving said autocorrelation coefficients,

a plurality of processing units (51, 53, 55) each of which includes a processor (45; Fig. 6) which

(i) multiplies a value at a first input (a) by a first lattice coefficient ($k_j$), resulting in a first product,

(ii) multiples a value at a second input (b) by said first lattice coefficient ($k_j$), resulting in a second product, and

(iii) adds said value at the second input to said first product and said value at the first input to said second product,

a first structure to re-apply the outputs (e, g) from said plurality of parallel processing units to the inputs (a, b) of at least one of said parallel processing units, such that

during a first sequence in each processor, the first and second inputs (a, b) receive respectively adjacent autocorrelation coefficients to be multiplied by said first lattice coefficient ($k_j$), and each product is added to the coefficient at the other input to yield a pair of first intermediate values ($\zeta \{^{1}_{(i-1)}; \zeta \{^{1}_{i})$) at the outputs (e, g) of each processor, and

during a subsequent sequence, the pairs of first intermediate values are re-applied to the processor inputs by said first structure, to thereby multiply a respective first and second of said first intermediate values by a second lattice coefficient ($k_2$) to produce respective third and fourth products, and to add the first of said first intermediate values to said fourth product and the second of said first intermediate values to said third product, to yield a respective pair of second intermediate values,

said first and second intermediate values being produced, in sequence, during a first time interval, and

divider circuitry (67, 73) for forming the quotient of a selected pair of said autocorrelation coefficients to produce said first lattice coefficient, and for forming the quotient of a selected pair of said first intermediate values to produce said second lattice coefficient,

characterized in that

the number of processing units is less than the system order p, and

that a second structure (71) is provided for storing selected ones of said first and second intermediate values and selectively retrieving, during appropriate time intervals subsequent to the first time interval, the stored intermediate values therefrom for application to appropriate inputs of said processing units such that further pairs of intermediate values are produced when further remaining autocorrelation coefficients are applied to said processors.

2. In a signal processor which receives autocorrelation coefficients $r_i$ with i = (0 - p]corresponding to a system having order p, a method for providing lattice coefficients $k_j$ with $j = [1 - p]$ of said system, comprising

applying said autocorrelation coefficients to a plurality of processing units (51, 53, 55) each of which includes a processor (45; Fig. 6),

multiplying, in each processing unit, a value at a first input (a) by a first lattice coefficient ($k_j$), resulting in a first product,

multiplying, in each processing unit, a value at a second input (b) by said first lattice coefficient ($k_j$) resulting in a second product,

adding, in each processing unit, said value at the second input to said first product and said value at the first input to said second product,

re-applying the outputs (e, g) from said plurality of parallel processing units to the inputs (a, b) of at least one of said parallel processing units, such that

during a first sequence in each processor, the first and second inputs (a, b) receive respectively adjacent autocorrelation coefficients to be multiplied by said first lattice coefficient ($k_1$), and each product is added to the coefficient at the other input to yield a pair of first intermediate values ($\zeta \{_{(i-1)}^1; \zeta \{_i^1$ at the outputs (e, g) of each processor, and

during a subsequent sequence, the pairs of first intermediate values are re-applied to the processor inputs to thereby multiply a respective first and second of said first intermediate values by a second lattice coefficient ($k_2$) to produce respective third and fourth products, and to add the first of said first intermediate values to said fourth product and the second of said first intermediate values to said third product, to yield a respective pair of second intermediate values,

producing said first and second intermediate values, in sequence, during a first time interval, and

forming the quotient of a selected pair of said autocorrelation coefficients to produce said first lattice coefficient, and forming the quotient of a selected pair of said first intermediate values to produce said second lattice coefficient,

characterized by

providing a number of processing units less than the system order p, and

storing selected ones of said first and second intermediate values and selectively retrieving, during appropriate time intervals subsequent to the first time interval, the stored intermediate values for application to appropriate inputs of said processing units such that further pairs of intermediate values are produced when further remaining autocorrelation coefficients are applied to said processors.

3. A signal processor which receives autocorrelation coefficients $r_j$ with $i = [-(p) - p]$ corresponding to a system having order p, for providing normal and adjoint lattice coefficients $k_j$ and $k\{_j^*$, respectively, with $j = [1 - p]$ of said system, comprising

an input device (65) for receiving said autocorrelation coefficients,

a plurality of processing units (51, 53, 55) each of which includes a processor (45; Fig. 6) which

(i) multiplies a value at a first input (a) by a first normal lattice coefficient ($k_j$), resulting in a first product, (ii) multiplies a value at a second input (b) by a first adjoint lattice coefficient ($k\{_j^*$), resulting in a second product and

(iii) adds said value at the second input to said first product and said value at the first input to said second product,

a first structure to re-apply the outputs (e, g) from said plurality of parallel processing units to the inputs (a, b) of at least one of said parallel processing units, such that

during a first sequence in each processor, the first and second inputs (a, b) receive respectively adjacent autocorrelation coefficients to be respectively multiplied by said first normal and adjoint lattice coefficients ($k_1$, $k\{_1^*$), and each product is added to the coefficient at the other input to yield a pair of first intermediate values ($\zeta \{_{(i-1)}^1; \xi \{_i^1$) at the outputs (e, g) of each processor, and

during a subsequent sequence, the pairs of first intermediate values are re-applied to the processor inputs by said first structure, to thereby multiply a respective first and second of said first intermediate values by second normal and adjoint lattice coefficients ($k_2$, $k\{_2^*$) to produce respective third and fourth products, and to add the first of said first intermediate values to said fourth product and the second of said first intermediate values to said third product, to yield a respective pair of second intermediate values,

said first and second intermediate values being produced, in sequence, during a first time interval, and

divider circuitry (67, 73) for forming the quotient of a selected pair of said autocorrelation coefficients to produce said first normal and adjoint lattice coefficients, and for forming the quotients of selected pairs of said first intermediate values to produce said second normal and adjoint lattice coefficients,

characterized in that

the number of processing units is less than the system order p, and

that a second structure (71) is provided for storing selected ones of said first and second intermediate values and selectively retrieving, during appropriate time intervals subsequent to the first time interval, the stored intermediate values therefrom for application to appropriate inputs of said processing units such that further pairs of intermediate values are produced when further remaining autocorrelation coefficients are applied to said processors.

4. In a signal processor which receives autocorrelation coefficients $r_i$ with $i = [-(p) - p]$ corresponding to a system having order p, a method for providing normal and adjoint lattice coefficients $k_j$ and $k_j^*$, respectively, with $j = [1 - p]$ of said system, comprising

applying said autocorrelation coefficients to a plurality of processing units (51, 53, 55) each of which includes a processor (45; Fig. 6),

multiplying, in each processing unit, a value at a first input (a) by a first normal lattice coefficient $(k_j)$, resulting in a first product,

multiplying, in each processing unit, a value at a second input (b) by a first adjoint lattice coefficient $(k_j^*)$, resulting in a second product,

adding, in each processing unit, said value at the second input to said first product and said value at the first input to said second product,

re-applying the outputs (e, g) from said plurality of parallel processing units to the inputs (a, b) of at least one of said parallel processing units, such that

during a first sequence in each processor, the first and second inputs (a, b) receive respectively adjacent autocorrelation coefficients to be respectively multiplied by said first normal and adjoint lattice coefficients $(k_1, k_1^*)$, and each product is added to the coefficient at the other input to yield a pair of first intermediate values $(\zeta_{(i-1)}^1; \xi_{(i)}^1)$ at the outputs (e, g) of each processor, and

during a subsequent sequence, the pairs of first intermediate values are re-applied to the processor inputs to thereby multiply a respective first and second of said first intermediate values by second normal and adjoint lattice coefficients $(k_2, k_2^*)$ to produce respective third and fourth products, and to add the first of said first intermediate values to said fourth product and the second of said first intermediate values to said third product, to yield a respective pair of second intermediate values, producing said first and second intermediate values, in sequence, during a first time interval, and

forming the quotient of a selected pair of said autocorrelation coefficients to produce said first normal and adjoint lattice coefficients, and forming the quotients of selected pairs of said first intermediate values to produce said second normal and adjoint lattice coefficients,

characterized by

providing a number of processing units less than the system order p, and

storing selected ones of said first and second intermediate values and selectively retrieving, during appropriate time intervals subsequent to the first time interval, the stored intermediate values for application to appropriate inputs of said processing units such that further pairs of intermediate values are produced when further remaining autocorrelation coefficients are applied to said processors.

## Patentansprüche

1. Signalprozessor, der Autokorrelationskoeffizienten $r_i$ mit $i = [0 - p]$ entsprechend einem System der Ordnung p zur Erzeugung von Gitterkoeffizienten $k_j$ mit $j = [1 - p]$ des Systems erhält, mit

einer Eingabevorrichtung (65) zur Annahme der Autokorrelationskoeffizienten,

einer Anzahl von Verarbeitungseinheiten (51, 53, 55) mit jeweils einem Prozessor (45; Fig. 6), der

(i) einen Wert an einem ersten Eingang (a) mit einem ersten Gitterkoeffizienten $(k_i)$ mit dem Ergebnis eines ersten Produkts multipliziert,

(ii) einen Wert an einem zweiten Eingang (b) mit dem ersten Gitterkoeffizienten $(k_i)$ mit dem Ergebnis eines zweiten Produkts multipliziert, und der

(iii) den Wert am zweiten Eingang zu dem ersten Produkt und den Wert am ersten Eingang zu dem zweiten Produkt addiert,

einer ersten Anordnung zum erneuten Anlegen der Ausgangssignale (e, g) aus der Anzahl von parallelen Verarbeitungseinheiten an die Eingänge (a, b) wenigstens einer der parallelen Verarbeitungseinheiten, derart, daß

während einer ersten Sequenz in jedem Prozessor die ersten und zweiten Eingänge (a, b) jeweils angrenzende Autokorrelationskoeffizienten erhalten, die mit dem ersten Gitterkoeffizienten $(k_i)$ multipliziert werden, wobei

jedes Produkt zu dem Koeffizienten am anderen Eingang addiert wird, um ein Paar von ersten Zwischenwerten ($\zeta \{_{(i-1)}^1, \zeta \{_i^1$) an den Ausgängen (e, g) eines jeden Prozessors zu erzeugen, und daß

während einer folgenden Sequenz die Paare von ersten Zwischenwerten durch die erste Anordnung erneut an die Prozessoreingänge angelegt werden, um dadurch jeweils erste und zweite Werte der ersten Zwischenwerte mit einem zweiten Gitterkoeffizienten ($k_2$) zu multiplizieren, um dritte bzw. vierte Produkte zu erzeugen, und um den ersten Wert der ersten Zwischenwerte zu dem vierten Produkt und den zweiten Wert der ersten Zwischenwerte zu dem dritten Produkt zu addieren, um jeweils ein Paar von zweiten Zwischenwerten zu erhalten,

wobei die ersten und zweiten Zwischenwerte aufeinanderfolgend während eines ersten Zeitintervalles erzeugt werden, und mit

einer Teilerschaltung (67, 73) zur Bildung des Quotienten aus einem ausgewählten Paar der Autokorrelationskoeffizienten zur Erzeugung des ersten Gitterkoeffizienten und zur Bildung des Quotienten aus einem ausgewählten Paar der ersten Zwischenwerte, um den zweiten Gitterkoeffizienten zu erzeugen,

dadurch **gekennzeichnet,**

daß die Anzahl der Verarbeitungseinheiten kleiner ist als die Ordnung p des Systems, und

daß eine zweite Anordnung (71) vorgesehen ist, die ausgewählte der ersten und zweiten Zwischenwerte speichert und die selektiv während geeigneter Zeitintervalle, die auf das erste Zeitintervall folgen, die gespeicherten Zwischenwerte zum Anlegen an geeignete Eingänge der Verarbeitungseinheiten wieder ausliest, derart, daß weitere Paare von Zwischenwerten erzeugt werden, wenn die weiteren verbleibenden Autokorrelationskoeffizienten den Prozessoren zugeführt werden.

2. In einem Signalprozessor, der Autokorrelationskoeffizienten $r_i$ mit i = [0 - p] entsprechend einem System der Ordnung p erhält, ein Verfahren zur Erzeugung von Gitterkoeffizienten $k_j$ mit j = [1 - p] des Systems, mit

dem Anlegen der Autokorrelationskoeffizienten an eine Anzahl von Verarbeitungseinheiten (51, 53, 55) mit jeweils einem Prozessor (45; Fig. 6),

dem Multiplizieren, in jeder Verarbeitungseinheit, eines Wertes an einem ersten Eingang (a) mit einem ersten Gitterkoeffizienten ($k_j$) mit dem Ergebnis eines ersten Produkts,

dem Multiplizieren, in jeder Verarbeitungseinheit, eines Wertes an einem zweiten Eingang (b) mit dem ersten Gitterkoeffizienten ($k_j$) mit dem Ergebnis eines zweiten Produkts,

dem Addieren, in jeder Verarbeitungseinheit, des Wertes am zweiten Eingang zum ersten Produkt und des Wertes am ersten Eingang zum zweiten Produkt,

dem erneuten Anlegen der Ausgangssignale (e, g) aus der Anzahl von parallelen Verarbeitungseinheiten an die Eingänge (a, b) wenigstens einer der parallelen Verarbeitungseinheiten, derart, daß während einer ersten Sequenz in jedem Prozessor die ersten und zweiten Eingänge (a, b) jeweils angrenzende Autokorrelationskoeffizienten erhalten, die mit dem ersten Gitterkoeffizienten ($k_1$) multipliziert werden, wobei jedes Produkt zu dem Koeffizienten am anderen Eingang addiert wird, um ein Paar von ersten Zwischenwerten ($\zeta \{_{(i-1)}^1, \zeta \{_i^1$) an den Ausgängen (e, g) eines jeden Prozessors zu erzeugen, und daß

während einer folgenden Sequenz die Paare von ersten Zwischenwerten durch die erste Anordnung erneut an die Prozessoreingänge angelegt werden, um dadurch jeweils erste und zweite Werte der ersten Zwischenwerte mit einem zweiten Gitterkoeffizienten ($k_2$) zu multiplizieren, um dritte bzw. vierte Produkte zu erzeugen, und um den ersten Wert der ersten Zwischenwerte zu dem vierten Produkt und den zweiten Wert der ersten Zwischenwerte zu dem dritten Produkt zu addieren, um jeweils ein Paar von zweiten Zwischenwerten zu erhalten,

des Erzeugens der ersten und zweiten Zwischenwerte aufeinanderfolgend während eines ersten Zeitintervalles, und

dem Bilden des Quotienten aus einem ausgewählten Paar der Autokorrelationskoeffizienten zur Erzeugung des ersten Gitterkoeffizienten und dem Bilden des Quotienten aus einem ausgewählten Paar der ersten Zwischenwerte, um den zweiten Gitterkoeffizienten zu erzeugen,

**gekennzeichnet** durch

das Vorsehen einer Anzahl von Verarbeitungseinheiten, die kleiner ist als die Ordnung p des Systems, und

das Speichern von ausgewählten der ersten und zweiten Zwischenwerte und das selektive Wiederauslesen, während geeigneter Zeitintervalle, die auf das erste Zeitintervall folgen, der gespeicherten Zwischenwerte zum Anlegen an geeignete Eingänge der Verarbeitungseinheiten, derart, daß weitere Paare von Zwischenwerten erzeugt werden, wenn die weiteren verbleibenden Autokorrelationskoeffizienten den Prozessoren zugeführt werden.

3. Signalprozessor, der Autokorrelationskoeffizienten $r_i$ mit i = [-(p) - p] entsprechend einem System der Ordnung p zur Erzeugung normaler und angrenzender Gitterkoeffizienten $k_j$ bzw. $k_j^*$ mit j = [1 - p] des Systems erhält, mit

einer Eingabevorrichtung (65) zur Annahme der Autokorrelationskoeffizienten,

einer Anzahl von Verarbeitungseinheiten (51, 53, 55) mit jeweils einem Prozessor (45; Fig. 6), der

(i) einen Wert an einem ersten Eingang (a) mit einem ersten normalen Gitterkoeffizienten ($k_l$) mit dem Ergebnis eines ersten Produkts multipliziert,

(ii) einen Wert an einem zweiten Eingang (b) mit einem ersten angrenzenden Gitterkoeffizienten ($k_l^*$) mit dem Ergebnis eines zweiten Produkts multipliziert, und der

(iii) den Wert am zweiten Eingang zu dem ersten Produkt und den Wert am ersten Eingang zu dem zweiten Produkt addiert,

einer ersten Anordnung zum erneuten Anlegen der Ausgangssignale (e, g) aus der Anzahl von parallelen Verarbeitungseinheiten an die Eingänge (a, b) wenigstens einer der parallelen Verarbeitungseinheiten, derart, daß

während einer ersten Sequenz in jedem Prozessor die ersten und zweiten Eingänge (a, b) jeweils angrenzende Autokorrelationskoeffizienten erhalten, die jeweils mit den ersten normalen und angrenzenden Gitterkoeffizienten ($k_l$, $k_l^*$) multipliziert werden, wobei jedes Produkt zu dem Koeffizienten am anderen Eingang addiert wird, um ein Paar von ersten Zwischenwerten ($\zeta\{_{(i-1)}^1, \zeta\{_i^1$) an den Ausgängen (e, g) eines jeden Prozessors zu erzeugen, und daß

während einer folgenden Sequenz die Paare von ersten Zwischenwerten durch die erste Anordnung erneut an die Prozessoreingänge angelegt werden, um dadurch jeweils erste und zweite Werte der ersten Zwischenwerte mit zweiten normalen und angrenzenden Gitterkoeffizienten ($k_2$, $k_2^*$) zu multiplizieren, um dritte bzw. vierte Produkte zu erzeugen, und um den ersten Wert der ersten Zwischenwerte zu dem vierten Produkt und den zweiten Wert der ersten Zwischenwerte zu dem dritten Produkt zu addieren, um jeweils ein Paar von zweiten Zwischenwerten zu erhalten,

wobei die ersten und zweiten Zwischenwerte aufeinanderfolgend während eines ersten Zeitintervalles erzeugt werden, und mit

einer Teilerschaltung (67, 73) zur Bildung des Quotienten aus einem ausgewählten Paar der Autokorrelationskoeffizienten zur Erzeugung der ersten normalen und angrenzenden Gitterkoeffizienten und zur Bildung des Quotienten aus einem ausgewählten Paar der ersten Zwischenwerte, um die zweiten normalen und angrenzenden Gitterkoeffizienten zu erzeugen,

dadurch **gekennzeichnet,**

daß die Anzahl der Verarbeitungseinheiten kleiner ist als die Ordnung p des Systems, und

daß eine zweite Anordnung (71) vorgesehen ist, die ausgewählte der ersten und zweiten Zwischenwerte speichert und die selektiv während geeigneter Zeitintervalle, die auf das erste Zeitintervall folgen, die gespeicherten Zwischenwerte zum Anlegen an geeignete Eingänge der Verarbeitungseinheiten wieder ausliest, derart, daß weitere Paare von Zwischenwerten erzeugt werden, wenn die weiteren verbleibenden Autokorrelationskoeffizienten den Prozessoren zugeführt werden.

4. In einem Signalprozessor, der Autokorrelationskoeffizienten $r_i$ mit i = [-(p) - p] entsprechend einem System der Ordnung p zur Erzeugung von normalen und angrenzenden Gitterkoeffizienten $k_j$ bzw. $k_j^*$ mit j = [1 - p] des Systems erhält, mit

dem Anlegen der Autokorrelationskoeffizienten an eine Anzahl von Verarbeitungseinheiten (51, 53, 55) mit jeweils einem Prozessor (45; Fig. 6),

dem Multiplizieren, in jeder Verarbeitungseinheit, eines Wertes an einem ersten Eingang (a) mit einem ersten normalen Gitterkoeffizienten ($k_l$) mit dem Ergebnis eines ersten Produkts,

dem Multiplizieren, in jeder Verarbeitungseinheit, eines Wertes an einem zweiten Eingang (b) mit einem ersten angrenzenden Gitterkoeffizienten ($k_l^*$) mit dem Ergebnis eines zweiten Produkts,

dem Addieren, in jeder Verarbeitungseinheit, des Wertes am zweiten Eingang zum ersten Produkt und des Wertes am ersten Eingang zum zweiten Produkt,

dem erneuten Anlegen der Ausgangssignale (e, g) aus der Anzahl von parallelen Verarbeitungseinheiten an die Eingänge (a, b) wenigstens einer der parallelen Verarbeitungseinheiten, derart, daß

während einer ersten Sequenz in jedem Prozessor die ersten und zweiten Eingänge (a, b) jeweils angrenzende Autokorrelationskoeffizienten erhalten, die jeweils mit den ersten normalen und angrenzenden Gitterkoeffizienten ($k_l$, $k_l^*$) multipliziert werden, wobei jedes Produkt zu dem Koeffizienten am anderen Eingang addiert wird, um ein Paar von ersten Zwischenwerten ($\zeta\{_{(i-1)}^1, \zeta\{_i^1$) an den Ausgängen (e, g) eines jeden Prozessors zu erzeugen, und daß

während einer folgenden Sequenz die Paare von ersten Zwischenwerten durch die erste Anordnung erneut an die Prozessoreingänge angelegt werden, um dadurch jeweils erste und zweite Werte der ersten Zwischenwerte mit zweiten normalen und angrenzenden Gitterkoeffizienten ($k_2$, $k_2^*$) zu multiplizieren, um dritte bzw.

vierte Produkte zu erzeugen, und um den ersten Wert der ersten Zwischenwerte zu dem vierten Produkt und den zweiten Wert der ersten Zwischenwerte zu dem dritten Produkt zu addieren, um jeweils ein Paar von zweiten Zwischenwerten zu erhalten,

des Erzeugens der ersten und zweiten Zwischenwerte aufeinanderfolgend während eines ersten Zeitintervalles, und

dem Bilden des Quotienten aus einem ausgewählten Paar der Autokorrelationskoeffizienten zur Erzeugung der ersten normalen und angrenzenden Gitterkoeffizienten und dem Bilden des Quotienten aus einem ausgewählten Paar der ersten Zwischenwerte, um die zweiten normalen und angrenzenden Gitterkoeffizienten zu erzeugen,

gekennzeichnet durch

das Vorsehen einer Anzahl von Verarbeitungseinheiten, die kleiner ist als die Ordnung p des Systems, und

das Speichern von ausgewählten der ersten und zweiten Zwischenwerte und das selektive Wiederauslesen, während geeigneter Zeitintervalle, die auf das erste Zeitintervall folgen, der gespeicherten Zwischenwerte zum Anlegen an geeignete Eingänge der Verarbeitungseinheiten, derart, daß weitere Paare von Zwischenwerten erzeugt werden, wenn die weiteren verbleibenden Autokorrelationskoeffizienten den Prozessoren zugeführt werden.

## Revendications

1. Processeur de signaux recevant des coefficients d'autocorrélation $r_i$ avec i = [0 - p] correspondant à un système d'ordre p, pour délivrer des coefficients de réseau $k_j$ avec = [1 - p] dudit système, comportant

un dispositif d'entrée (65) afin de recevoir lesdits coefficients d'autocorrélaiion, une pluralité d'unités de traitement (51, 53, 55) dont chacune comprend un processeur (45 ; Figure 6) qui

(i) multiplie une valeur à une première entrée (a) par un premier coefficient de réseau ($k_j$), donnant un premier produit,

(ii) multiplie une valeur à une seconde entrée (b) par ledit premier coefficient de réseau ($k_j$), donnant un second produit, et

(iii) additionne ladite valeur à la seconde entrée audit premier produit et ladite valeur à la première entrée audit second produit,

une première structure pour réappliquer les sorties (e, g) provenant de ladite pluralité d'unités de traitement parallèles aux entrées (a, b) d'au moins une desdites unités de traitement parallèles, de telle sorte que

durant une première séquence dans chaque processeur, les première et seconde entrées (a, b) reçoivent respectivement des coefficients d'autocorrélation adjacents devant être multipliés par ledit premier coefficient de réseau ($k_j$), et chaque produit est additionné au coefficient à l'autre entrée pour donner une paire de premières valeurs intermédiaires ($\zeta^1_{(l-1)}$; $\zeta^l_l$ aus sorties (e, g) de chaque processeur, et

durant une séquence ultérieure, les paires de premières valeurs intermédiaires sont réappliquées aux entrées du processeur par ladite première structure pour ainsi multiplier une première et une seconde, respective, desdites premières valeurs intermédiaires par un second coefficient de réseau ($k_2$) pour produire des troisième et quatrième produits respectifs, et pour additionner la première desdites premières valeurs intermédiaires audit quatrième produit et la seconde desdites premières valeurs intermédiaires audit troisième produit, pour donner une paire respective de secondes valeurs intermédiaires,

lesdites première et seconde valeurs intermédiaires étant produites, en succession, durant un premier intervalle de temps, et

un circuit diviseur (66, 73) pour former le quotient d'une paire choisie desdits coefficients d'autocorrélation pour produire ledit premier coefficient de réseau, et pour former le quotient d'une paire choisie desdites premières valeurs intermédiaires pour produire ledit second coefficient de réseau,

caractérisé en ce que

le nombre d'unités de traitement est inférieur à l'ordre p du système, et

en ce qu'une seconde structure (71) est prévue pour mémoriser des valeurs choisies desdites première et seconde valeurs intermédiaires et en extraire sélectivement, durant des intervalles de temps appropriés ultérieurs au premier intervalle de temps, les valeurs intermédiaires mémorisées en vue d'une application à des entrées appropriées desdites unités de traitement de manière à produire d'autres paires de valeurs intermédiaires lorsque d'autres coefficients d'autocorrélation restants sont appliqués auxdits processeurs.

2. Dans un processeur de signaux recevant des coefficients d'autocorrélation $r_i$ avec i = [0 - p] correspondant à un système d'ordre p, un procédé afin de produire des coefficients de réseau $k_j$ avec = [1 - p] dudit sys-

EP 0 259 458 B1

tème, comportant les étapes consistant à :

appliquer lesdits coefficients d'autocorrélation à une pluralité d'unités de traitement (51, 53, 55) dont chacune comprend un processeur (45 ; Figure 6),

multiplier, dans chaque unité de traitement, une valeur à une première entrée (a) par un premier coefficient de réseau ($k_j$), donnant un premier produit,

multiplier dans chaque unité de traitement, une valeur à une seconde entrée (b) par ledit premier coefficient de réseau ($k_j$), donnant un second produit,

additionner, dans chaque unité de traitement, ladite valeur à la seconde entrée audit premier produit et ladite valeur à la première entrée audit second produit,

réappliquer les sorties (e, g) de ladite pluralité d'unités de traitement parallèles aux entrées (a, b) d'au moins une desdites unités de traitement parallèles, de telle sorte que

durant une première séquence dans chaque processeur, les première et seconde entrées (a, b) reçoivent respectivement des coefficients d'autocorrélation adjacents devant être multipliés par ledit premier coefficient de réseau ($k_1$), et chaque produit est additionné au coefficient sur l'autre entrée pour donner une paire de premières valeurs intermédiaires ($\zeta\{^1_{(l-1)}; \zeta\{^1_l)$ sur les sorties (e, g) de chaque processeur, et

durant une séquence suivante, les paires de premières valeurs intermédiaires sont réappliquées aux entrées du processeur pour ainsi multiplier une première et seconde, respective, desdites premières valeurs intermédiaires par un second coefficient de réseau ($k_2$) pour produire des troisième et quatrième produits respectifs, et pour additionner la première desdites premières valeurs intermédiaires audit quatrième produit et la seconde desdites premières valeurs intermédiaires audit troisième produit, pour donner une paire respective de secondes valeurs intermédiaires, produire lesdites première et seconde valeurs intermédiaires, en succession, durant un premier intervalle de temps, et

former le quotient d'une paire choisie desdits coefficients d'autocorrélation pour produire ledit premier coefficient de réseau, et former le quotient d'une paire choisie desdites premières valeurs intermédiaires pour produire ledit second coefficient de réseau,

caractérisé

par les étapes consistant à

prévoir un nombre d'unités de traitement inférieur à l'ordre p du système, et

mémoriser des valeurs intermédiaires choisies desdites première et seconde valeurs intermédiaires et extraire sélectivement, durant des intervalles de temps appropriés ultérieurs au premier intervalle de temps, les valeurs intermédiaires mémorisées en vue d'une application à des entrées appropriées desdites unités de traitement de manière à produire d'autres paires de valeurs intermédiaires lorsque d'autres coefficients d'autocorrélation restants sont appliqués auxdits processeurs.

3. Processeur de signaux recevant des coefficients d'autocorrélation $r_i$ avec $i = [-(p) - p]$ correspondant à un système d'ordre p, pour produire des coefficients de réseau normaux et adjoints $k_j$ et $k\{^*_j$, respectivement, avec $j = [1 - p]$ dudit système, comportant

un dispositif d'entrée (65) pour recevoir lesdits coefficients d'autocorrélation,

une pluralité d'unités de traitement (51, 53, 55) dont chacune comprend un processeur (45 ; Figure 6) qui

(i) multiplie une valeur à une première entrée (a) par un premier coefficient de réseau normal ($k_j$), donnant un premier produit,

(ii) multiplie une valeur à une seconde entrée (b) par un premier coefficient de réseau adjoint ($k\{^*_j$), donnant un second produit, et

(iii) additionne ladite valeur à la seconde entrée audit premier produit et ladite valeur à la première entrée audit second produit,

une première structure pour réappliquer les sorties (e, g) de ladite pluralité d'unités de traitement parallèles aux entrées (a, b) d'au moins une desdites unités de traitement parallèles, de telle sorte que

durant une première séquence dans chaque processeur, les première et seconde entrées (a, b) reçoivent respectivement des coefficients d'autocorrélation adjacents devant être respectivement multipliés par lesdits premiers coefficients de réseau normaux et adjoints ($k_i$, $k\{^*_i$), et chaque produit est additionné au coefficient sur l'autre entrée pour donner une paire de premières valeurs intermédiaires ($\zeta\{^1_{(l-1)}; \xi\{^1_l$ sur les sorties (e, g) de chaque processeur, et

durant une séquence ultérieure, les paires des premières valeurs intermédiaires sont réappliquées aux entrées du processeur par ladite première structure, pour ainsi multiplier une première et seconde, respective, desdites premières valeurs intermédiaires par des seconds coefficients de réseau normaux et adjoints ($k_2$, $k\{^*_2$) pour produire des troisième et quatrième produits respectifs, et pour additionner la première desdites premières valeurs

17

EP 0 259 458 B1

intermédiaires audit quatrième produit et la seconde desdites premières valeurs intermédiaires audit troisième produit, pour donner une paire respective de secondes valeurs intermédiaires,

lesdites première et seconde valeurs intermédiaires étant produites, en succession, durant un premier intervalle de temps, et

un circuit diviseur (67, 73) pour former le coefficient d'une paire choisie desdits coefficients d'autocorrélation pour produire lesdits premiers coefficients de réseau normaux et adjoints, et pour former les quotients de paires choisies desdites premières valeurs intermédiaires pour produire lesdits seconds coefficients de réseau normaux et adjoints,

caractérisé en ce que

le nombre d'unités de traitement est inférieur à l'ordre p du système, et

une seconde structure (71) est prévue pour mémoriser des valeurs choisies desdites première et seconde valeurs intermédiaires et extraire sélectivement, durant des intervalles de temps appropriés ultérieurs audit premier intervalle de temps, les valeurs intermédiaires mémorisées en vue d'une application à des entrées appropriées desdites unités de traitement de manière à produire d'autres paires de valeurs intermédiaires lorsque les autres coefficients d'autocorrélation restants sont appliqués auxdits processeurs.

4. Dans un processeur de signaux recevant des coefficients d'autocorrélation $r_i$ avec i = [-(p) - p] correspondant à un système d'ordre p, un procédé afin d'établir des coefficients de réseau normaux et adjoints $k_j$ et $k_j^*$, respectivement, avec j = [1 - p] dudit système, comportant les étapes consistant à

appliquer lesdits coefficients d'autocorrélation à une pluralité d'unités de traitement (51, 53, 55) dont chacune comprend un processeur (45 ; Figure 6),

multiplier, dans chaque unité de traitement, une valeur à une première entrée (a) par un premier coefficient de réseau normal ($k_j$), donnant un premier produit,

multiplier, dans chaque unité de traitement, une valeur à une seconde entrée (b) par un premier coefficient de réseau adjoint ($k_j^*$), donnant un second produit,

additionner dans chaque unité de traitement, ladite valeur à ladite seconde entrée audit premier produit et ladite valeur à la première entrée audit second produit,

réappliquer les sorties (e, g) de ladite pluralité d'unités de traitement parallèles aux entrées (a, b) d'au moins une desdites unités de traitement parallèles, de telle sorte que

durant une première séquence dans chaque processeur, les première et seconde entrées (a, b) reçoivent respectivement des coefficients d'autocorrélation adjacents devant être respectivement multipliés par lesdits premiers coefficients de réseau normaux et adjoints ($k_1$, $k_1^*$), et chaque produit est additionné au coefficient à l'autre entrée pour donner une paire de premières valeurs intermédiaires ($\zeta \{^1_{(i-1)}$; $\xi \{^1_i\}$) aux sorties (e, g) de chaque processeur, et

durant une séquence ultérieure, les paires de premières valeurs intermédiaires sont réappliquées aux entrées du processeur pour ainsi multiplier une première et seconde, respective, desdites premières valeurs intermédiaires par des seconds coefficients de réseau normaux et adjoints ($k_2$, $k_2^*$) pour produire des troisième et quatrième produits respectifs, et pour additionner la première desdites premières valeurs intermédiaires audit quatrième produit et la seconde desdites premières valeurs intermédiaires audit troisième produit, pour donner une paire respective de secondes valeurs intermédiaires,

produire lesdites première et seconde valeurs intermédiaires, en succession, durant un premier intervalle de temps, et

former le quotient d'une paire choisie desdits coefficients d'autocorrélation pour produire lesdits premiers coefficients de réseau normaux et adjoints, et former les quotients de paires choisies desdites premières valeurs intermédiaires pour produire lesdits seconds coefficients de réseau normaux et adjoints,

caractérisé par

les étapes consistant à

prévoir un nombre d'unités de traitement inférieur à l'ordre p du système, et

mémoriser des valeurs choisies desdites premières et secondes valeurs intermédiaires et extraire sélectivement, durant des intervalles de temps appropriés ultérieurs audit premier intervalle de temps, les valeurs intermédiaires mémorisées pour une application à des entrées appropriées desdites unités de traitement de manière à produire d'autres paires de valeurs intermédiaires lorsque d'autres coefficients d'autocorrélation restants sont appliqués auxdits processeurs.

FIG. I

FINAL VALUES

THIRD INTERMEDIATE VALUES

SECOND INTERMEDIATE VALUES

FIRST INTERMEDIATE VALUES

SYSTEM SIGNAL → DIGITAL AUTO-CORRELATOR → AUTO-CORRELATION COEFICIENTS

FIG. 2

FIG. 3

$f = d + k_j \cdot c$

$e = a + k_j \cdot b$

FIG.4   "BUTTERFLY" BASIC CELL (BBC)

BBC  1  ———————

BBC  2  — — — — —

BBC  3  •••••••••••

FIG.5

$e = a + k_i b$

$g = b + k_i a$

**FIG. 6**

**FIG. 7**

FIG. 8

FIG. 9

PARTITION n+1

PARTITION n

THE SAME QUANTITY

## FIG. IOA

PARTITION n+1

PARTITION n

TWO DIFFERENT QUANTITIES

## FIG. IOB

FIG. II

PARTITION 3

PARTITION 2

PARTITION 1

VIRTUAL PROCESSORS

REAL PROCESSORS

INITIAL DIVISION

FIG. 12